# EUROPEAN PATENT SPECIFICATION

(11) **EP 2 864 117 B1**
(45) Date of publication and mention of the grant of the patent: **11.04.2018**
(21) Application number: 13728205.9
(22) Date of filing: 13.06.2013
(51) Int. Cl.: B32B 17/10, C08L 33/16, B32B 17/00

(54) **FLAME RETARDANT RADIATION CURABLE COMPOSITIONS**
FLAMMSCHUTZHEMMENDE STRAHLUNGSHÄRTBARE ZUSAMMENSETZUNGEN
COMPOSITIONS DURCISSABLES PAR RAYONNEMENT ET RÉSISTANTS AUX FLAMMES

(30) Priority: 20.06.2012 WO PCT/EP2012/061896
(43) Date of publication of application: 29.04.2015
(73) Proprietor: Allnex Belgium S.A., 1620 Drogenbos (BE)
(72) Inventor: VAN DEN BERGEN, Hugues, 1620 Drogenbos (BE)
(74) Representative: Destryker, Elise Martine
(86) International application number: PCT/EP2013/062222
(87) International publication number: WO 2013/189821

(56) References cited:
- WO-A1-2010/049126
- US-A- 4 591 522

## Description

The present invention relates to flame retardant radiation curable compositions especially useful for making fire-resistant glass laminates.

Standard glass offers little fire protection and will break typically when temperatures over 120 °C are reached. With structural fires capable of reaching extremely high temperatures very quickly, there is a need for fire-resistant specialty glass that can survive high temperatures, typically in excess of 900 °C. This fire-resistant glass should keep flames and smoke from spreading from one room to another, restricting fire damage to a limited area. Fire-resistant glazing must pass a battery of tests established by national test standards. The ratings of fire-resistant glazing are time increments reflecting the length of time the glass should be expected to perform reliably in a fire. The testing is conducted simulating conditions in a burning building. In order to successfully pass the test, the glass must retain in its frame; cracking is allowed provided the glass can still act as a barrier to flames and smoke. In US an additional test, called the hose stream test, demonstrating the ability of the glass to withstand a thermal shock is also required. In this test, the hot glass pane is sprinkled with water at a pressure of at least 30 psi through a fire hose with a high pressure nozzle. In general, only specialty glasses such as ceramic glasses pass this test.

Many of the locations requiring fire-resistant glass are also locations where impact safety is required. Fire-resistant glasses like ceramic glasses have only very low impact resistance. Up to now, these glasses have been laminated with the aid of thermoplastic fluorinated films. However, this lamination requires special expensive equipment and does not allow making bent glass.

The technique of laminating glass panes, i.e. bind two or more glass panes together in a permanent way by an interlayer, is well known and generally applied. Such glass laminates are used for automotive and building applications. Laminating protects people for splinters in case of glass breaking and it also allows improving the impact resistance or sound insulation properties of the glazing. Laminated glass can be produced by liquid cast-in-place resin polymerized in situ. In this technique, two glass panes are bound together by a double-sided adhesive tape that also functions as a distance holder. The thus created cavity between the two panes is filled up with a liquid resin. The liquid resin is then polymerized, the so-called "curing", chemically by the use of appropriate catalysts and accelerators or by exposure to radiations. After completion of the polymerization a solid interlayer is formed. Different types of liquid resins are used for glass lamination, polyesters, polyurethanes, silicones or acrylics. Nowadays UV resins are mostly used, their polymerization is initiated by the action of UV light of low intensity. Flame retardant glass laminates have for example been described in WO 2004/035308. The compositions described therein are based on halogenated and/or phosphorous radiation curable monomers contributing to flame retardant properties of the cured composition. The halogenated derivatives used are aromatic known to give yellowing upon ageing.

Flame retardant compositions having good flame retardant properties, i.e. said to meet the stringent flammability rating of UL94 V0 have also been described in WO 2005/054330. These flame retardant curable compositions comprise at least two flame retardant compounds belonging to different classes, especially a combination of brominated flame retardant compounds with aluminum hydroxide and phosphorous containing compounds. Most of the compositions described in this patent application are not translucent and hence are not suitable for making transparent laminates that can be used in building.

Moreover, it has been discovered that the use of these phosphorous containing compositions do not permit to pass the fire resistant tests.

WO 2009/124854 and US 2011/1256390 (WO 2010/049126) disclose flame-resistant glazing and flame retardants compositions comprising non copolymerizable halogenated flame retardant additives. These compositions contain significant amounts of non flame retardant monomers that can lead to ignition of the cured interlayer.

Hence, there is still a need to develop improved radiation curable flame retardant compositions. The present invention therefore relates to a radiation curable flame retardant composition comprising:
(a) from 3 to 90 % by weight of at least one oligomer having one or more (meth)acryl or vinyl groups,
(b) from 10 to 97 % by weight of at least one reactive aliphatic halogenated flame retardant additive having one or more (meth)acryl or vinyl groups,
(c) optionally, from 0 to 87 % by weight of at least one non-reactive halogenated flame retardant additive and,
(d) optionally from 0 to 19 % by weight of at least one monomer having one or more (meth)acryl or vinyl groups.

By reactive additive is meant a compound bearing one or more (meth)acryl or vinyl groups that is able to copolymerize with the oligomer(s) and optionally the monomer(s). This in contract with e.g. the halogenated flame retardant additives disclosed in WO 2010/049126 that do do no bear any (meth)acryl or vinyl groups, and hence are non-reactive or non-copolymerizable additives. By non-reactive additive is meant a compound that does not bear any copolymerizable carbon-carbon double bond and hence is not able to copolymerize (in other words is non copolymerisable).

The reactive aliphatic halogenated flame retardant additive may be liquid or solid.

The reactive aliphatic halogenated flame retardant additive is preferably substantially free from phosphorus.

By substantially free is meant that the phosphor (P) content is below 1 % by weight (of the flame retardant additive), preferably below 0.5 % by weight, especially below 0.1 % by weight.

The reactive aliphatic halogenated flame retardant additive is preferably a brominated or a chlorinated compound, more preferably a brominated compound. It is most preferably a brominated compound having a bromine content of at least 40 % by weight. Particularly preferred are brominated compounds having a bromine content of at least 45 % by weight, especially at least 60 % and most preferably of at least 70 % by weight.

Preferred reactive aliphatic halogenated flame retardant additives are aliphatic halogenated (meth)acrylates bearing one or more (meth)acryl groups, preferably one (meth)acryl group, most preferably one acryl group.

Preferred reactive aliphatic halogenated (meth)acrylates are brominated and chlorinated derivatives, more preferred are brominated ones.

Examples of suitable reactive aliphatic halogenated flame retardant additives are 2,2-bis(bromomethyl)-1,3-propanedyil di(meth)acrylate, dibromoneopentylalcohol di(meth)acrylate, tribromoneopentylalcohol (meth)acrylate. Preferred is tribromoneopentylalcohol acrylate corresponding to Formula I.

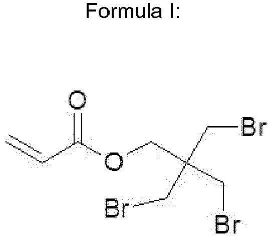

The non-reactive halogenated flame retardant additive may be liquid or solid, it is advantageously an organic compound. It is preferably selected from those which have a solubility in n-butyl acrylate or in tribromoneopentylalcohol acrylate at 20 °C of at least 10 g/l. Preferably the solubility in n-butyl acrylate or in tribromoneopentylalcohol acrylate at 20 °C is at least 100 g/l, more preferably at least 200 g/l.

By soluble is meant able to form one single liquid phase, which is transparent before curing. By soluble in said composition is meant that the flame retardant additive is soluble *per* se in the polymer precursors, id est without the need of any solvent.

The non-reactive halogenated flame retardant additive is preferably substantially free from phosphorus.

The non-reactive halogenated flame retardant additive is preferably a brominated or a chlorinated compound, more preferably a brominated compound. It is most preferably a brominated compound presenting a bromine content of at least 40 % by weight. Particularly preferred are brominated compounds having a bromine content of at least 45 % by weight, especially at least 60 % and most preferably of at least 70 % by weight.

Aliphatic non-reactive halogenated flame retardant additives are preferred, especially brominated and chlorinated ones. Brominated aliphatic flame retardants are preferred. Most preferred are aliphatic brominated alcohols.

Halogenated alcohols, more in particular brominated alcohols, such as those described in "Fire retardancy of polymer materials" edited by Arthur F. Grand, Charles A. Wilkie, Marcel Dekker Inc., 2000, Tables 2, 3, 4, 5, 6, pages 257-269) are suitable. For instance, tetrabromobisphenol A, tetrabromophthalic acid diester/ether diol, tetrabromobisphenol A bis(2-hydroxyethyl oxide), 2,2-bis(bromoethyl)-1,3-propanediol, 2,2,6,6-tetrakis(bromomethyl)-4-oxaheptane-1,7-diol, 2,3-dibromo-1-propanol, 2,3-dibromo-2-butene-1,4-diol, 2,2,2-tris(bromomethyl)ethanol, , tribromoneopentylalcohol, 2,4,6-tribromophenol, pentabromophenol, 2,4-dibromophenol, tetrabromobisphenol S, 4,4'-methylenebis[2,6-dibromophenol], 2,3,5,6-tetrabromo-1,4-benzenedimethanol are suitable halogenated alcohols.

Tribromoneopentylalcohol (especially the one commercialized under the name of FR-513 by ICL) is particularly preferred as non-reactive halogenated flame retardant additive (c).

In addition to the reactive aliphatic halogenated flame retardant additive (b) and optional non-reactive halogenated flame retardant additive (c) as described here above, the composition may contain other flame retardant additives. The composition preferably does not contain phosphorus containing flame retardant additives.

The flame retardant composition comprises at least one oligomer. The term oligomer is used to designate a compound which has suitable polymerizable functionality, preferably comprising at the chains ends or laterally along the chain, one or more (meth)acryl or vinyl groups.

In the present invention, the term "(meth)acryl" group is to be understood as to encompass both acryl (CH2=CHCOO-) and methacryl (CH2=CCH3COO-) groups and mixtures thereof. "(Meth)acryl" compound or derivative refers to compounds comprising at least one acryl or methacryl group or mixtures thereof or mixtures of such compounds.

The oligomers comprise one or more (meth)acryl groups. Advantageously the oligomer of the invention is a non flame retardant oligomer. Advantageously the oligomer is free from halogen and/or phosphorus groups.

Preferred oligomers used in the composition according to the invention are those having a molecular weight MW of from 1000 to 10000. Preferred are those having a MW of at least 2000, especially those having a MW of at least 4000. Preferred oligomers have a MW of at most 8000, preferably at most 7000, more preferably of at most 6000 as determined by gel permeation chromatography (GPC).

The number average molecular weight (Mn) given above is measured by GPC (in THF on a 3xPLgel 5µm Mixed-D LS 300x7.5mm column MW range 162 to 377400 g/mol calibrated with polystyrenes standards, at 40 °C, using a Merck-Hitachi apparatus).

Preferred oligomers are selected from urethane (meth)acrylates, polyester (meth)acrylates and epoxy (meth)acrylates, more particularly flexible urethane and epoxy (meth)acrylates having an elongation at break of 10 to 500 %, more preferably 50 to 300 %. The elongation at break is measured by tensile testing of a radiation-cured thin free-film of the oligomer according to ASTM D 638.

Urethane(meth)acrylates are well known in the art and commercially available products. Suitable urethane (meth)acrylates have for example been described in WO 2004/037599. Examples of a suitable urethane(meth)acrylates are urethane acrylates EBECRYL®230 and EBECRYL®270 commercially available from Cytec Surface Specialties.

Epoxy(meth)acrylates, i.e. (meth)acrylate esters of epoxy resins, are also well known in the art. Suitable epoxy (meth)acrylates have for example been described in Technical Conference Proceedings - RadTech 2002: The Premier UV/EB, Conference & Exhibition, Indianapolis, IN, United States, Apr. 28-May 1, 2002 (2002), 171-181 Publisher: RadTech International North America, Chevy Chase, Md.. Examples of a suitable epoxy(meth)acrylate are those commercialized under the names of EBECRYL®3708 and EBECRYL®3302.

Urethane (meth)acrylates, especially aliphatic urethane acrylates are particularly preferred. The composition according to the invention may comprise one or more monomers (d).

The monomers preferably comprise one or more (meth)acryl groups. Advantageously the monomer of the invention is a non flame retardant monomer. Advantageously the monomer is free from halogen and/or phosphorus groups.

The monomers are generally mono-, di-, tri- and/or tetra-(meth)acrylates. Monomers include (meth)acrylic acid, beta-carboxyethyl acrylate, butyl(meth)acrylate, methyl(meth)acrylate, isobutyl (meth)acrylate, 2-ethylhexyl(meth)acrylate, cyclohexyl (meth)acrylate, n- hexyl (meth)acrylate, isobornyl (meth)acrylate, isooctyl (meth)acrylate, n-lauryl (meth)acrylate, octyl/decyl (meth)acrylate, 2-hydroxyethyl(meth)acrylate, phenoxyethyl(meth)acrylate, nonylphenolethoxylate mono(meth)acrylate, 2-(-2-ethoxyethoxy)ethyl(meth)acrylate, 2-butoxyethyl (meth)acrylate, cardura (meth)acrylate, N-vinyl pyrrolidone, 1,6-hexanediol di(meth)acrylate, pentaerythritoltri(meth)acrylate, trimethylolpropanetri(meth)acrylate, phenylglycidylether(meth)acrylate, and the oxyethylated or/and oxypropylated derivatives thereof. Preferred are mono(meth)acrylates, especially acrylic acid, butylacrylate, methylmethacrylate, 2-ethylhexylacrylate and isobornylacrylate. More preferred are n-butylacrylate, acrylic acid and 2-ethylhexylacrylate.

The radiation curable composition according to the invention preferably comprises at least 5 % by weight of oligomer(s), more preferably at least 7 % by weight. It does preferably not comprise more than 80 % by weight of oligomer(s), more preferably not more than 30 % by weight.

The radiation curable composition according to the invention preferably comprises at least 20 % by weight of reactive additive(s), more preferably at least 40 % by weight. It does preferably not comprise more than 94 % by weight of reactive additive(s), more preferably not more than 80 % by weight.

The radiation curable composition according to the invention preferably comprises at least 1 % by weight of non-reactive additive(s) (c), more preferably at least 10 % by weight. It does preferably not comprise more than 59 % by weight of non-reactive additive(s), more preferably not more than 50 % by weight.

The radiation curable composition according to the invention preferably does not comprise more than 15 % by weight of monomer(s), more preferably not more than 10 % by weight, most preferably not more than 5 % by weight.

The radiation curable composition can comprise:
(a) From 5 to 80 % by weight of at least one oligomer having one or more (meth)acryl or vinyl groups,
(b) From 20 to 90 % by weight of at least one reactive aliphatic halogenated flame retardant additive having one or more (meth)acryl or vinyl groups,
(c) From 5 to 59 % by weight of at least one non-reactive halogenated flame retardant additive.

The compositions according to the present invention generally comprise a photochemical initiator and/or a chemical initiator. Photochemical initiators (also called photoinitiators) are compounds that can generate radicals by absorption of light, typically UV light. Typical photochemical initiators are described in "The chemistry of free radical polymerization", edited by Graeme Moad and David H.Solomon; Pergamon (1995), pages 84 to 89. Alternatively, the same composition without photoinitiator can be cured by electron beam.

Chemical initiators are typically azo-compounds or peroxides that are decomposed to radicals through the application of heat, light or a redox process. The mechanisms are described in "The chemistry of free radical polymerization", edited by Graeme Moad and David H.Solomon; Pergamon (1995), pages 53-95.

The composition according to the invention typically contains from 0 to 5 % by weight of at least one photoinitiator. Preferably, the amount of photoinitiator in the composition is comprised between 0.01 and 3% by weight.

Alternatively, the composition can be cured in the absence of a photoinitiator, especially when cured by electron beam.

The radiation curable composition according to the present invention can also contain other compounds, such as adhesion promoters, stabilizers, antioxidants and UV-absorbers. The amount of other compounds usually does not exceed 10 % by weight. Preferably, the composition comprises from 0,01 to 3% by weight of adhesion promotor, especially those selected from silanes.Advantageously the composition is substantially free from water or solvents (non copolymerisable liquid solvents).

The radiation curable composition according to the invention can be prepared in different ways. It is generally prepared by mixing compounds (a) and (b) and optional compounds (c) and/or (d)until a single phase solution is obtained. The mixing is generally done at a temperature from 5 to 100 °C.

The radiation curable flame retardant composition generally has a viscosity at 25 °C of from 1 to 10000 mPas, preferably of from 10 to 3000 mPas, more preferably from 10 to 1000 mPas, most preferably from 10 to 250 mPa.s as measured using a cone and plate viscosimeter.

The radiation curable flame retardant compositions according to the present invention permit to meet the V2 classification, the higher classification V1 and even the V0 classification of the UL-94 test at 1 mm thickness. The compositions permit to produce translucent layers and more preferably transparent layers. The composition according to the invention shows improved flame retardant properties, high impact resistance, acoustic insulation, aging resistance and adhesion on laminates.

It has been observed that a radiation curable composition according to the invention permits to bind the two glass panes together and to form a glass laminate presenting an advantageous combination of properties typical of glass laminates such as impact resistance and sound insulating properties.

The radiation curable composition according to the invention using a reactive aliphatic halogenated flame retardant additive forms glass laminates having good ageing performances, especially limited yellowing.

The radiation curable compositions according to the invention are therefore suitable for a large number of applications, such as casting resin for glass laminates and more specifically for fire-resistant glass laminates, polycarbonate laminates, UV curable adhesives and flame retardant coatings.

The radiation curable compositions according to the invention are particularly useful for making laminates, especially glass laminates and more specifically glass laminates based on fire-resistant glazing. By glass laminates is understood laminates comprising at least one glass pane selected from glass ceramic pane, borosilicate glass pane, soda lime glass pane or glass appearance pane and at least one layer obtained with the composition according to the invention. In the present description, the term "glass appearance pane" is used to designate panes having a glass appearance such as polycarbonate panes. Polycarbonate panes can be used but are less preferred because of their poor behavior in case of fire.

The pane used in accordance with the invention is preferably selected from glass panes such as soda lime glass pane, glass ceramic pane or borosilicate glass pane, which may optionally also be tempered.

The glass used in accordance with the invention can be floated or drawn. More particularly, planar glass with parallel and fire-polished surface of high surface quality is used.

By soda lime glass is meant a glass that is produced essentially from silicone dioxide (SiO2), lime (CaCO3) and soda (Na2CO3). Floated soda lime glass can also be thermally or chemically tempered.

Borosilicate glass refers to silicate glass which contains generally between 7 % and 15 % boron oxide. Borosilicate glass can also be floated or tempered. It is generally employed where relatively high chemical resistance and high thermal durability are important.

Glass ceramic generally consists of a crystalline phase and a residual glassy phase. The starting glassy phase is at first obtained by way of standard glass manufacturing processes. The crystalline phase is then obtained by heat treatment. A glass ceramic has generally a low coefficient of thermal expansion what make them particularly suitable for use in fire-resistant glazing.

When used in glass laminate applications, the composition according the invention advantageously may comprise a photoinitiator selected depending on the absorption characteristics of the glass with respect to UV radiation, such that sufficient amount of UV radiation can penetrate through the glass pane or glass ceramic pane and initiates the polymerization by activation of the photoinitiator.

Examples of photoinitators include benzophenone, and/or acetophenone derivatives such as α-hydroxyalkylphenyl ketone, benzoin alkyl ethers and benzyl ketals, monoacylphosphine oxides and bisacylphosphine oxides. Preferred photoinitiators are 1-hydroxycyclohexyl phenyl ketone (Irgacure®184), 2-hydroxy-2-methyl1-phenyl-propane-1-one (Darocure®1173), and 2,4,6-trimethylbenzoyl diphenylphosphine oxide (Lucirin®TPO).

According to a variant of the invention, multi-sheet laminates, i.e. laminates comprising more than one glass pane and/or more than one other panes may be used. The glass panes used in the present invention may be of the same nature or different. They can be independently selected from soda lime glass pane, glass ceramic pane or borosilicate glass pane, which may optionally also be tempered. In these multi-sheets laminates, comprising several laminates bound to each other with an interlayer, each interlayer may be of the same or different composition, flame retardant or not.

The present invention also relates to glass laminates comprising at least one interlayer obtained from the flame retardant composition according to the invention. The laminates according to the invention present good fire-resistance and provide improved impact resistance.

The laminates according to the invention are easy to handle and can be cut on size, especially when based on non tempered glass.

The flame retardant radiation curable composition permits to obtain translucent or transparent cured interlayer making them advantageous for window applications.

Laminates obtained with the invention advantageously are transparent having haze values of less than 5.0 percent, more preferably less than 3.0 percent as measured by Haze Meter.

In a most preferred embodiment, the laminate is based on two glass panes of different nature, for example a combination of soda lime glass and glass ceramic, a combination of soda lime glass and borosilicate glass. In comparison to laminates combining glass ceramic/glass ceramic or borosilicate glass/borosilicate glass, the substitution of one fire resistant glass pane (glass ceramic or borosilicate glass) by a soda lime glass, allows decreasing the cost of the fire resistant laminate as the soda lime glass is significantly cheaper than a fire resistant glass pane. The laminate according to this preferred embodiment present similar or improved performances when compared to glass ceramic/glass ceramic or borosilicate glass/borosilicate glass laminates.

The present invention also provides a method of producing a laminate comprising the steps of:
(a) providing a flame retardant composition according to the invention,
(b) placing the flame retardant composition between two panes selected from glass ceramic pane, borosilicate glass pane, soda lime glass pane or glass appearance pane,
(c) curing the composition to form the interlayer between the panes.

The steps (a), (b) and (c) are not necessarily distinct, successive, separated steps. In a preferred embodiment, the curable composition can be placed between the panes, allowed to cure by irradiation under UV-light, so as to form a laminate comprising a cured composition layer ("interlayer") bonding the panes together. The flame retardant composition is more preferably "cast" in a casting cell comprising two opposed outer plies, spaced apart and separated from one another by a peripheral spacer between them, and cured in the cell. Such techniques are well known and are described in, for example, GB-A-2015417, GB-A-2032844 and in EP-A-0200394.

The radiation curable composition flame retardant composition can be cured by exposure to actinic radiations such as ultraviolet (UV) radiations, gamma-rays,X-rays or by electron beam. It can also be chemically cured by appropriate catalysts and accelerators. Curing is preferably done by exposure of the composition to actinic radiations, more preferably to UV light, especially by the action of UV light of low intensity. Typically an intensity of 1 to 10, preferably of 1.5 to 2.5, mW/cm² is used.

Typically, the residence time in the UV oven is from 5 to 60, preferably from 15 to 30 minutes.

A strong technical advantage of the process according to the invention is that the cavity between the two glasses is completely filled up with the liquid resin without formation of bubbles, the shape or roughness of the glass surfaces is of no importance on the bonding with the resin interlayer.

The present invention is illustrated by the following, non-limiting examples.

Compositions of Example 1 and Comparative Examples COMP 1 and COMP 2 have been prepared by mixing the different compounds as described in the Table here below. Unless otherwise specified the amounts of the different compounds are weight %. The properties obtained with these compositions were measured and are reported in the Table here below.

Urethane acrylate is an aliphatic difunctional urethane acrylate with improved flexibility; flame retardant FR-513 is tribromoneopentyl alcohol, a solid brominated flame retardant containing about 73 % by weight of bromine, commercialized by ICL. tribromoneopentylalcohol acrylate was synthesized according to the recipe described in WO 2007/007332 (p 11-12).

Impact test: glass laminates were made by binding two soda lime (float) glass panes of 30 x 30 cm, 4 mm nominal thickness together with double-sided tape of 1 mm thickness. The composition as described in the aforementioned table was introduced in the interspace using a funnel. Curing was done in a conventional UV oven, intensity measured on the interlayer was 1.5 - 2.5 mW/cm². Curing time was 20 - 25 minutes.

Fire test UL9 (2009) Fire tests of windows assemblies (45 min) : glass laminates were made by binding one glass ceramic pane (4mm) with soda lime glass (3 mm) pane (70 x 91 cm), together with double-sided tape of 1 mm thickness. The composition as described in the aforementioned table was introduced in the interspace using a funnel. Curing was done in a similar way as described above. The soda lime glass pane was placed at the non-exposed side of the furnace, meaning that the glass ceramic faced the interior and the soda lime the exterior of the furnace.

Safety performance was assessed by an impact test similar to NBN S23-002(=STS38), dropping a steel ball of 2.2 kg from a height of 1,5 m onto the 30 cm x 30 cm soda lime glass laminates as described above. The test was repeated until the steel ball passed through the laminate. The impact number is defined as the maximal number of impacts the laminate was able to resist before the steel ball passed through it.

| | **COMP 1** | **COMP 2** | **Ex 1** |
|---|---|---|---|
| urethane acrylate | 19 | | 12,5 |
| tribromoneopentylalcohol (FR 513) | 49 | | 30 |
| tribromoneopentylalcohol acrylate | 0 | 100 | 57,5 |
| butylacrylate | 11 | | |
| acrylic acid | 20 | | |
| photoinitiator | 0,2 | 0,2 | 0,2 |
| silane additive | 1 | 1 | 1 |
| Br % | 36,3 | 63,0 | 58,4 |
| viscosity at 25 °C mPas | 140 | 170 | 1260 |
| impact 2.24kg drop height 1m50 (1) | 5 | 0 | 1 |
| Visual aspect of laminate (1) and (2) | transparent | transparent | transparent |
| Fire test UL9 (2009) Fire tests of windows assemblies (45 min) ** (2) | not passed | | passed |

| | | | |
|---|---|---|---|
| (1) Laminate = 4mm soda lime glass/1 mm cured interlayer/4 mm soda lime glass (30 cm x 30 cm) (2) Laminate = 4mm glass ceramic /1 mm cured interlayer/3 mm soda lime glass (70 cm x 91 cm) | | | |

As can be seen from the examples here above, the composition according to the invention (Ex 1) permit to obtain transparent laminates with impact resistance (at least one impact) and fire resistance (laminate from ex 1 maintained its structural integrity throughout the 45 minutes fire endurance test according to UL9 (2009). Laminate based on COMP1 provided impact resistance, but did not pass the fire test UL9 (2009) (flames were observed at the non-exposed side). It demonstrates the advantage of using a reactive aliphatic halogenated flame retardant additive.

The laminate of example 1 resists one impact while the comparative example COMP2 did not resist one impact, demonstrating the need to include an acrylated oligomer (urethane acrylate) to confer impact resistance.

## Claims

1. Radiation curable flame retardant composition comprising:
(a) from 3 to 90 % by weight of at least one oligomer having one or more (meth)acryl or vinyl groups,
(b) from 10 to 97 % by weight of at least one reactive aliphatic halogenated flame retardant additive having one or more (meth)acryl or vinyl groups,
(c) optionally, from 0 to 87 % by weight of at least one non-reactive halogenated flame retardant additive, and
(d) optionally, from 0 to 19 % by weight of at least one monomer having one or more (meth)acryl or vinyl groups.

2. Radiation curable composition according to claim 1 wherein, the oligomers are selected from urethane (meth)acrylates, polyester (meth)acrylates and epoxy (meth)acrylates.

3. Radiation curable composition according to any of the preceding claims, wherein the reactive aliphatic halogenated flame retardant additive is an aliphatic halogenated (meth)acrylate.

4. Radiation curable composition according to any of the preceding claims, wherein the reactive aliphatic halogenated flame retardant additive is an aliphatic brominated (meth)acrylate.

5. Radiation curable composition according to any of the preceding claims wherein, the reactive aliphatic halogenated flame retardant additive is a brominated flame retardant additive having a bromine content of at least 40 % by weight.

6. Radiation curable composition according to any of the preceding claims wherein, the reactive brominated flame retardant additive is tribromoneopentylalcohol acrylate of Formula I:

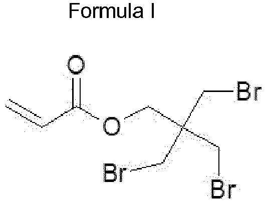

7. Radiation curable composition according to any of the preceding claims, wherein the non-reactive halogenated flame retardant is selected from halogenated flame retardants which have a solubility in n-butyl acrylate or in tribromoneopentylalcohol acrylate at 20 °C of at least 10 g/l.

8. Radiation curable composition according to any of the preceding claims, wherein the non-reactive halogenated flame retardant is a brominated flame retardant presenting a bromine content of at least 40 % by weight.

9. Radiation curable composition according to any of the preceding claims, wherein the non-reactive halogenated flame retardant is tribromoneopentylalcohol.

10. Radiation curable composition according to any of the preceding claims wherein the composition does not contain phosphorus containing flame retardant additives.

11. Glass laminate comprising at least one glass pane selected from glass ceramic pane, borosilicate glass pane, soda lime glass pane or glass appearance pane and at least one layer obtained with the composition according to any of claims 1 to 10.

12. Glass laminate according to claim 11, wherein the glass pane is selected from soda lime glass pane, glass ceramic pane or borosilicate glass pane, which may optionally be tempered.

13. Glass laminate according to any of claims 11 and 12, wherein a soda lime glass pane is combined with a glass ceramic pane or with a borosilicate glass pane.

14. Method for producing a glass laminate comprising at least two panes comprising the steps of:
(a) providing a flame retardant composition according to any of claims 1 to 10,
(b) placing the flame retardant composition between two panes selected from glass ceramic pane, borosilicate glass pane, soda lime glass pane or glass appearance pane,
(c) curing the composition to form the interlayer between the panes.

## Patentansprüche

1. Strahlungshärtbare flammhemmende Zusammensetzung, umfassend:
(a) 3 bis 90 Gew.-% zumindest eines Oligomers mit einer oder mehreren (Meth)acryl- oder Vinylgruppen,
(b) 10 bis 97 Gew.-% zumindest eines reaktiven aliphatischen halogenierten flammhemmenden Additivs mit einer oder mehreren (Meth)acryl- oder Vinylgruppen,
(c) gegebenenfalls 0 bis 87 Gew.-% zumindest eines nicht reaktiven halogenierten flammhemmenden Additivs und
(d) gegebenenfalls 0 bis 19 Gew.-% zumindest eines Monomers mit einer oder mehreren (Meth)acryl- oder Vinylgruppen.

2. Strahlungshärtbare Zusammensetzung nach Anspruch 1, wobei die Oligomere ausgewählt sind aus Urethan(meth)acrylaten, Polyester(meth)acrylaten und Epoxy(meth)acrylaten.

3. Strahlungshärtbare Zusammensetzung nach einem der vorstehenden Ansprüche, wobei das reaktive aliphatische halogenierte flammhemmende Additiv ein aliphatisches halogeniertes (Meth)acrylat ist.

4. Strahlungshärtbare Zusammensetzung nach einem der vorstehenden Ansprüche, wobei das reaktive aliphatische halogenierte flammhemmende Additiv ein aliphatisches bromiertes (Meth)acrylat ist.

5. Strahlungshärtbare Zusammensetzung nach einem der vorstehenden Ansprüche, wobei das reaktive aliphatische halogenierte flammhemmende Additiv ein bromiertes flammhemmendes Additiv mit einem Bromgehalt von zumindest 40 Gew.-% ist.

6. Strahlungshärtbare Zusammensetzung nach einem der vorstehenden Ansprüche, wobei das reaktive bromierte flammhemmende Additiv Tribromneopentylalkoholacrylat der Formel I ist:

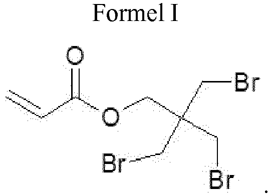

7. Strahlungshärtbare Zusammensetzung nach einem der vorstehenden Ansprüche, wobei der nicht reaktive halogenierte Flammhemmer ausgewählt ist aus halogenierten Flammhemmern, die eine Löslichkeit in n-Butylacrylat oder in Tribromneopentylalkoholacrylat bei 20 °C von zumindest 10 g/l aufweisen.

8. Strahlungshärtbare Zusammensetzung nach einem der vorstehenden Ansprüche, wobei der nicht reaktive halogenierte Flammhemmer ein bromierter Flammhemmer ist, der einen Bromgehalt von zumindest 40 Gew.-% hat.

9. Strahlungshärtbare Zusammensetzung nach einem der vorstehenden Ansprüche, wobei der nicht reaktive halogenierte Flammhemmer Tribromneopentylalkohol ist.

10. Strahlungshärtbare Zusammensetzung nach einem der vorstehenden Ansprüche, wobei die Zusammensetzung keine phosphorhaltigen flammhemmenden Additive enthält.

11. Glaslaminat, umfassend zumindest eine Glasscheibe, ausgewählt aus einer Glaskeramikscheibe, Borsilikatglasscheibe, Sodakalkglasscheibe oder Scheibe in Glasoptik, und zumindest eine Schicht, erhalten mit der Zusammensetzung nach einem der Ansprüche 1 bis 10.

12. Glaslaminat nach Anspruch 11, wobei die Glasscheibe ausgewählt ist aus einer Sodakalkglasscheibe, Glaskeramikscheibe oder Borsilikatglasscheibe, die gegebenenfalls vorgespannt sein kann.

13. Glaslaminat nach einem der Ansprüche 11 und 12, wobei eine Sodakalkglasscheibe mit einer Glaskeramikscheibe oder mit einer Borsilikatglasscheibe kombiniert wird.

14. Verfahren zur Herstellung eines Glaslaminats, umfassend zumindest zwei Scheiben, umfassend die Schritte:
(a) Bereitstellen einer flammhemmenden Zusammensetzung nach einem der Ansprüche 1 bis 10,
(b) Platzieren der flammhemmenden Zusammensetzung zwischen zwei Scheiben, ausgewählt aus einer Glaskeramikscheibe, Borsilikatglasscheibe, Sodakalkglasscheibe oder Scheibe in Glasoptik,
(c) Härten der Zusammensetzung unter Bildung der Zwischenschicht zwischen den Scheiben.

## Revendications

1. Composition ignifuge durcissable par irradiation comprenant :
(a) de 3 à 90 % en poids d'au moins un oligomère comportant un ou plusieurs groupes (méth)acryliques ou vinyliques,
(b) de 10 à 97 % en poids d'au moins un additif ignifuge halogéné aliphatique réactif comportant un ou plusieurs groupes (méth)acryliques ou vinyliques,
(c) optionnellement, de 0 à 87 % en poids d'au moins un additif ignifuge halogéné non réactif, et
(d) optionnellement, de 0 à 19 % en poids d'au moins un monomère comportant un ou plusieurs groupes (méth)acryliques ou vinyliques.

2. Composition durcissable par irradiation selon la revendication 1, dans laquelle les oligomères sont sélectionnés parmi des (méth)acrylates d'uréthane, des (méth)acrylates de polyester et des (méth)acrylates d'époxy.

3. Composition durcissable par irradiation selon l'une quelconque des revendications précédentes, dans laquelle l'additif ignifuge halogéné aliphatique réactif est un (méth)acrylate halogéné aliphatique.

4. Composition durcissable par irradiation selon l'une quelconque des revendications précédentes, dans laquelle l'additif ignifuge halogéné aliphatique réactif est un (méth)acrylate bromé aliphatique.

5. Composition durcissable par irradiation selon l'une quelconque des revendications précédentes, dans laquelle l'additif ignifuge halogéné aliphatique réactif est un additif ignifuge bromé ayant une teneur en brome d'au moins 40 % en poids.

6. Composition durcissable par irradiation selon l'une quelconque des revendications précédentes, dans laquelle l'additif ignifuge bromé réactif est l'acrylate de tribromonéopentylalcool ayant la formule I :

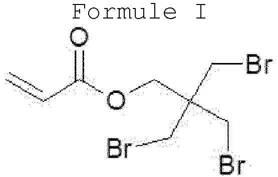

7. Composition durcissable par irradiation selon l'une quelconque des revendications précédentes, dans laquelle l'agent ignifuge halogéné non réactif est sélectionné parmi des agents ignifuges halogénés qui ont une solubilité dans l'acrylate de n-butyle ou dans l'acrylate de tribromonéopentylalcool à 20 °C d'au moins 10 g/l.

8. Composition durcissable par irradiation selon l'une quelconque des revendications précédentes, dans laquelle l'agent ignifuge halogéné non réactif est un agent ignifuge bromé présentant une teneur en brome d'au moins 40 % en poids.

9. Composition durcissable par irradiation selon l'une quelconque des revendications précédentes, dans laquelle l'agent ignifuge halogéné non réactif est le tribromonéopentylalcool.

10. Composition durcissable par irradiation selon l'une quelconque des revendications précédentes, la composition ne contenant pas d'additifs ignifuges contenant du phosphore.

11. Stratifié de verre comprenant au moins une vitre sélectionnée parmi une vitre en vitrocéramique, une vitre en verre de borosilicate, une vitre en verre sodocalcique ou une vitre ayant l'apparence du verre, et au moins une couche obtenue avec la composition selon l'une quelconque des revendications 1 à 10.

12. Stratifié de verre selon la revendication 11, dans lequel la vitre est sélectionnée parmi une vitre en verre sodocalcique, une vitre en vitrocéramique ou une vitre en verre de borosilicate, qui peut éventuellement être trempée.

13. Stratifié de verre selon l'une quelconque des revendications 11 et 12, dans lequel une vitre en verre sodocalcique est associée à une vitre en vitrocéramique ou à une vitre en verre de borosilicate.

14. Procédé de fabrication d'un stratifié de verre comprenant au moins deux vitres, comprenant les étapes qui consistent à :
(a) fournir une composition ignifuge selon l'une quelconque des revendications 1 à 10,
(b) disposer la composition ignifuge entre deux vitres sélectionnées parmi une vitre en vitrocéramique, une vitre en verre de borosilicate, une vitre en verre sodocalcique ou une vitre ayant l'apparence du verre,
(c) durcir la composition pour former la couche intermédiaire entre les vitres.
